Europäisches Patentamt

European Patent Office

Office européen des brevets

(19)

(11) Veröffentlichungsnummer: **0 100 891**
**A1**

(12) # EUROPÄISCHE PATENTANMELDUNG

(21) Anmeldenummer: **83106781.4**

(22) Anmeldetag: **11.07.83**

(51) Int. Cl.³: **G 01 N 15/00**

(30) Priorität: **17.08.82 CH 4918/82**

(43) Veröffentlichungstag der Anmeldung:
**22.02.84 Patentblatt 84/8**

(84) Benannte Vertragsstaaten:
**AT BE CH DE FR GB IT LI NL SE**

(71) Anmelder: **CONTRAVES AG**
**Schaffhauserstrasse 580**
**CH-8052 Zürich(CH)**

(72) Erfinder: **Feier, Markus**
**Rebbergstrasse 14**
**CH-8112 Otelfingen(CH)**

(72) Erfinder: **Marti, Ulrich**
**Lachenstrasse 4**
**CH-8184 Bachenbülach(CH)**

(54) **Verfahren und Vorrichtung zur Korrektur von Koinzidenzfehlern beim Zählen von Teilchen zweier Sorten.**

(57) Während einer vorbestimmten Messzeit werden in einer Detektoranordung (12) je einem Teilchen entsprechende elektrische Impulse erzeugt, deren Impulshöhe der Teilchengrösse entspricht. In einer Diskriminatorschaltung (14) werden die Impulse mit einem Schwellenwert verglichen. Die Impulse, deren Impulshöhe den Schwellenwert überschreitet, werden einer Zählerschaltung (16, $Z_E$) und einer Zeitmessschaltung (19, $T_E$) zur Messung der Gesamtdauer der Impulse zugeleitet. Alle Impulse werden einer Zählerschaltung (18, $Z_S$) und einer Zeitmessschaltung (20, $T_S$) zugeleitet. Die digitalen Werte aus den beiden Zählerschaltungen und den beiden Zeitmessschaltungen werden einem Digitalrechner (25) zugeleitet, in welchem ein um den Kreuzkoinzidenz-Fehler korrigiertes Zählergebnis $Z_E^{\ddagger}$ für die Impulse, deren Impulshöhe den Schwellenwert nicht überschreitet, berechnet wird gemäss $Z^{\ddagger} = (Z_S - Z_E) \cdot T_S/(T_S - T_E)$.

EP 0 100 891 A1

0100891

## Verfahren und Vorrichtung zur Korrektur von Koinzidenzfehlern beim Zählen von Teilchen zweier Sorten

Die Erfindung betrifft ein Verfahren und eine Vorrichtung zur Korrektur von Koinzidenzfehlern beim Zählen von Teilchen einer ersten Sorte in Gegenwart von Teilchen einer zweiten Sorte in einer gemischten Suspension beider Sorten, wobei die Teilchen der zweiten Sorte grösser und in höherer Konzentration vorhanden sind als die Teilchen der ersten Sorte. Beispielsweise bezieht sich die Erfindung auf das Zählen von Thrombozyten in einer verdünnten Blutprobe, in der die Erythrozyten in viel höherer Konzentration enthalten sind als die Thrombozyten.

Ein Verfahren und eine Vorrichtung zum Zählen von Thrombozyten in Gegenwart von Erythrozyten sind beispielsweise aus der DE-OS 3020263 bekannt. Nach dieser Lehre erzeugen die Teilchen einer verdünnten Blutprobe in einem Analysator elektrische Impulse, deren Höhe der Teilchengrösse entspricht. Die Impulshöhe wird mit einer Schwelle verglichen, die so gesetzt wird, dass die kleineren Thrombozyten-Impulse von den viel grösseren Erythrozyten-Impulsen unterschieden werden. Die beiden Sorten von Impulsen werden getrennt gezählt. Das Ergebnis der Thrombozyten-Zählung wird durch Subtrahieren eines Korrekturglieds vermindert, um den von den mitgezählten Erythrozyten verursachten Fehler zu korrigieren. Das abzuziehende Korrekturglied ist eine polynomiale Funktion des Ergebnisses der Erythrozyten-Zählung.

Wie sich herausstellt, erfüllt eine derartige Korrektur den Zweck, den von zu kleinen Erythrozyten-Impulsen verursachten Fehler im Ergebnis der Thrombozyten-Zählung zu eliminieren: die erwähnten, zu kleinen, fälschlicherweise als Thrombozyten-Impulse gezählten Erythrozyten-Impulse werden verursacht, wenn ein Erythrozyt die Messöffnung des Analysators anomal durchquert, zum Beispiel sehr langsam oder auf einer sehr exzentrischen Bahn. Die Häufigkeit solcher anomaler Impulse ist zumindest näherungsweise eine polynomiale Funktion der Anzahl Erythrozyten, und es ist daher verständlich, dass die entsprechenden Falschzählungen vom unkorrigierten Zählergebnis abzuziehen sind.

Ein anderer Fehler wird jedoch damit gar nicht korrigiert, nämlich der Kreuzkoinzidenz-Fehler, der vom Zusammentreffen von Thrombozyten mit einem Erythrozyten in der Messöffnung verursacht wird. Bei dieser Art von Fehlern werden der oder die kleineren Thrombozyten-Impulse durch den viel grösseren Erythrozyten-Impuls verdeckt.
Aufgabe der Erfindung ist es, diesen Kreuzkoinzidenz-Fehler zu korrigieren.

Die Korrektur von Koinzidenzfehlern bei der Zählung einer einzigen Sorte von Teilchen ist bekannt. So ist aus der DE-OS 2449321 bekannt, die Teilchen-Impulse während einer vorgegebenen Zeitspanne zu zählen und diese Zeitspanne um ein Zeitinkrement zu verlängern, das eine Funktion der Breite, Höhe und/oder Frequenz der Impulse ist. Ferner ist aus der US-PS 3938038 bekannt, die Teilchen-Impulse während einer vorgegebenen Zeitspanne zu zählen und das Ergebnis der Zählung zu erhöhen durch Multiplikation mit einem Faktor, der eine Funktion der summierten Dauer aller gezählten Impulse ist. Diesen beiden Patentdokumenten ist jedoch keine Lehre zu entnehmen, mit deren Hilfe die Aufgabe der Erfindung gelöst werden könnte: bei der Zählung des eingangs genannten Gemischs von Teilchen würde die Korrekturfunktion von der Breite, Höhe, Frequenz oder summierten Dauer der häufigsten und grössten Impulse bestimmt, so dass die Zählung der Teilchen der ersten Sorte fälschlicherweise von einer Funktion der Zählung der Teilchen der zweiten Sorte korrigiert würde.

Eine Unteraufgabe der Erfindung ist es daher, zur Korrektur des Kreuzkoinzidenz-Fehlers die richtige Korrekturfunktion zu bilden und das Zählergebnis mit dieser Korrekturfunktion richtig zu modifizieren.

Zur Lösung dieser Aufgabe und Unteraufgabe werden das eingangs genannte Verfahren beziehungsweise die eingangs genannte Vorrichtung gekennzeichnet durch die im Verfahrens- beziehungsweise im Vorrichtungsanspruch angegebenen Merkmale.

Im nachstehenden wird nun die Erfindung anhand der Zeichnung näher erläutert. Die einzige Figur zeigt eine zur Ausübung des Verfahrens geeignete Vorrichtung, im Blockschema.

Zur Vereinfachung bezieht sich das Nachstehende auf den Fall, wo die Teilchen der ersten Sorte Thrombozyten und die Teilchen der zweiten Sorte Erythrozyten sind. Ebenfalls zur Vereinfachung werden die entsprechenden Impulse "Thrombozyten-Impulse" und "Erythrozyten-Impulse" genannt. Auf an sich bekannte,zum Beispiel der DE-OS 3020263 entsprechende Weise werden die Thrombozyten-Impulse und die Erythrozyten-Impulse unterschieden und während einer vorbestimmten Messzeit gezählt. Ebenfalls auf an sich bekannte, zum Beispiel der DE-OS 2449321 entsprechende Weise wird die Dauer eines jeden Impulses gemessen, das heisst es wird festgestellt, wie lange die Impulshöhe einen Schwellenwert überschreitet; zudem wird diese Impulsdauer der entsprechenden Art des Impulses, also entweder einem Thrombozyten-Impuls oder einem Erythrozyten-Impuls zugeordnet. Während der Messzeit wird einerseits die Dauer der Thrombozyten-Impulse, andererseits die Dauer der Erythrozyten-Impulse summiert (zur Vereinfachung wird hier von Störimpulsen abgesehen, die zum Beispiel von Leukozyten oder von Zellentrümmern verursacht werden). Es ergibt sich also eine Gesamtdauer $T_T$ der Thrombozyten-Impulse und eine Gesamtdauer $T_E$ der Erythrozyten-Impulse; nach Bedarf liesse sich daraus auch eine Gesamtdauer $T_S = T_T + T_E$ aller Impulse berechnen.

Von der Ueberlegung ausgehend, dass kein Thrombozyten-Impuls erfasst wird, während ein Erythrozyten-Impuls erscheint, das heisst, dass die Zeit, in der Erythrozyten-Impulse anstehen, für die Erfassung von Thrombozyten-Impulsen als Totzeit der Erfassungsvorrichtung wirkt, ist zur Korrektur des Kreuzkoinzidenz-Fehlers die Messzeit um die Totzeit zu kompensieren. Zu diesem Zweck wird das Zählergebnis $Z_T$ der während der vorbestimmten Messzeit erfassten Thrombozyten-Impulse auf eine um die ausgefallene Messzeit, das heisst um die Totzeit korrigierte Messzeit bezogen, was durch folgende Gleichung (1) ausgedrückt wird:

$$Z_T^* = Z_T \cdot \frac{(T_T + T_E)}{T_T} \tag{1}$$

wobei $Z_T$ das unkorrigierte und $Z_T^*$ das korrigierte Zählergebnis der Thrombozyten-Impulse ist.

Es ist im Prinzip und im Resultat äquivalent, jedoch apparativ einfacher, einerseits die Erythrozyten-Impulse und deren Dauer, andererseits alle Impulse und deren Dauer zu erfassen und zu summieren. Dann ergibt sich das Zählergebnis $Z_T$ der Thrombozyten-Impulse als Differenz des Zählergebnisses $Z_S$ für alle Impulse und des Zählergebnisses $Z_E$ für die Erythrozyten-Impulse, und die Gesamtdauer $T_T$ der Thrombozyten-Impulse als Differenz der Gesamtdauer $T_S$ aller Impulse und der Gesamtdauer $T_E$ der Erythrozyten-Impulse, das heisst $Z_T = (Z_S - Z_E)$ und $T_T = (T_S - T_E)$. Unter diesen Umständen ergibt sich das korrigierte Zählergebnis der Thrombozyten-Impulse aus folgender Gleichung (2):

$$Z_T = (Z_S - Z_E) \cdot \frac{T_S}{(T_S - T_E)} \qquad (2)$$

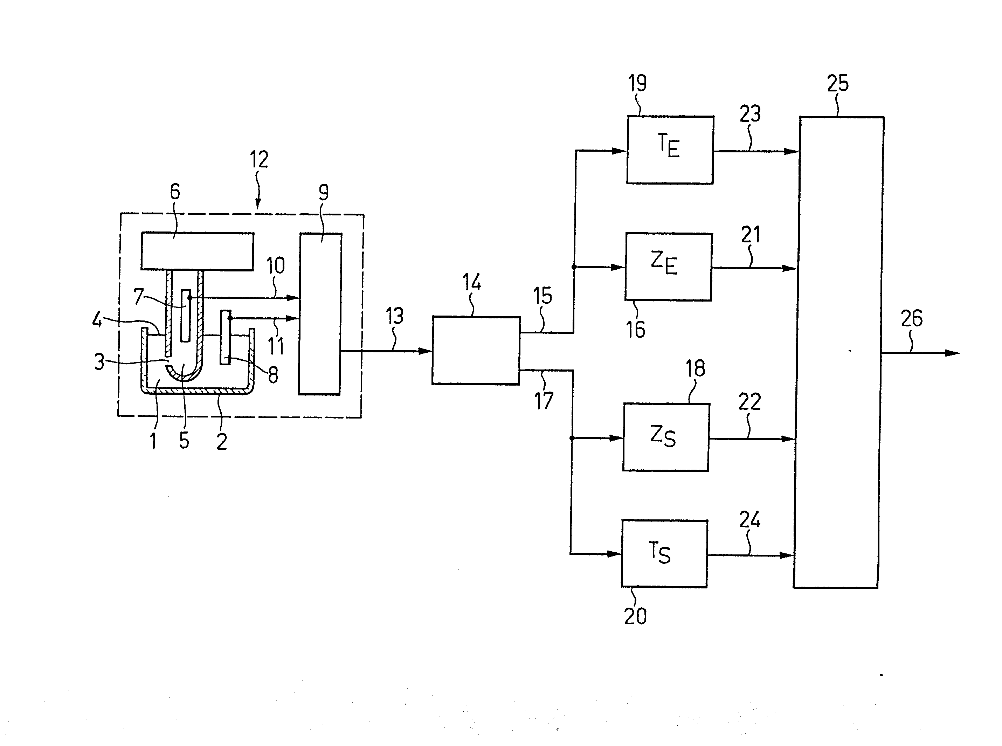

Eine Vorrichtung zum Ausüben dieses Verfahrens wird in der Figur 1 dargestellt. Es wird ein Blockschema gezeigt, dessen Elemente an sich bekannt sind und daher nicht näher beschrieben werden (es wird insbesondere auf die bereits zitierten DE-OS 3020263 und DE-OS 2449321 verwiesen). Eine Suspension 1 der eingangs genannten Teilchen, zum Beispiel eine verdünnte Blutprobe, befindet sich in einem Behälter 2. Sie wird über eine kleine Oeffnung 3, die unterhalb eines Spiegels 4 der Suspension 1 liegt, in eine Kammer 5 angesaugt, wobei die Menge der angesaugten Suspension von einer Volumen-Abmessvorrichtung 6 bestimmt wird. Die zum Ansaugen benötigte Zeit ist die im vorangehenden erwähnte vorbestimmte Messzeit. Blutteilchen, die beim Ansaugen durch die Oeffnung 3 hindurchtreten, verursachen eine Aenderung der elektrischen Impedanz im Bereich der Oeffnung 3. Diese Impedanzänderung wird durch Elektroden 7 und 8 erfasst und von einer Detektorschaltung 9 in einen elektrischen Impuls umgewandelt; zu diesem Zweck sind die Elektroden 7 beziehungsweise 8 mit der Detektorschaltung 9 über elektrische Leitungen 10

0100891

beziehungsweise 11 verbunden. Die Anordnungen 1 bis 11 bilden zusammen eine Detektoranordnung 12.

Zur Vereinfachung wird wiederum angenommen, dass die Suspension eine verdünnte Blutprobe ist und dass sie nur Thrombozyten und Erythrozyten enthält, das heisst Störeffekte, die von Leukozyten oder Zellentrümmern verursacht werden können, werden hier vernachlässigt.

Die Detektoranordnung 12 erzeugt auf ihrer Ausgangsleitung 13 bei jedem Durchgang eines Teilchens durch die Oeffnung 3 einen Impuls, der einer Diskriminatorschaltung 14 zugeführt wird. Durch Vergleich der Impulshöhe mit einem Schwellenwert wird in der Diskriminatorschaltung 14 festgestellt, welche Impulse den Schwellenwert überschreiten und daher einem Erythrozyten zuzuordnen sind: diese Erythrozyten-Impulse werden in der Diskriminatorschaltung 14 noch in eine zur fehlerlosen Zählung geeignete Impulsform gebracht und dann über eine Leitung 15 einer Zählerschaltung 16 zugeführt. Zudem werden in der Diskriminatorschaltung 14 alle Impulse, die von der Detektoranordnung 12 geliefert werden, in eine zur fehlerlosen Zählung geeignete Impulsform gebracht und dann über eine Leitung 17 einer Zählerschaltung 18 zugeführt. Ein Zweig der Leitung 15 führt die Erythrozyten-Impulse zu einer Zeitmessschaltung 19, in der die Gesamtdauer gemessen wird, während der Impulse auf der Leitung 15 anstehen; bei der Zeitmessschaltung 19 handelt es sich beispielsweise um einen Zähler, dem die Teilchen-Impulse sowie die Zeitimpulse eines Zeitimpulsgenerators (Clock) über ein UND-Gatter zugeführt werden, so dass die Zeitimpulse gezählt werden, die eintreffen, während ein Teilchen-Impuls ansteht, und somit ein der Gesamtdauer der eingetroffenen Erythrozyten-Impulse entsprechender Zählerstand in der Zeitmessschaltung 19 gebildet wird. Auf gleiche Weise führt ein Zweig der Leitung 17 alle Impulse zu einer Zeitmessschaltung 20, in der die Gesamtdauer gemessen wird, während der Teilchen-Impulse auf der Leitung 17 anstehen. Es ist ersichtlich, dass - wie in der Figur eingezeichnet - in den Elementen 16, 18, 19 und 20 als jeweiliger Zählerstand die digitalen Werte $Z_E$, $Z_S$, $T_E$ und $T_S$ gebildet werden. Diese Werte werden über jeweilige, zur Uebertragung von Digitalwerten geeignete Leitungen 21, 22, 23 und 24 einem Digitalrechner 25 zugeführt, in dem die Berechnung des korrigierten Zählergebnisses der Thrombozyten-Impulse gemäss Gleichung (2) durchgeführt wird. Das korrigierte Zählergebnis $Z_T^*$ sowie andere Werte, die nach Bedarf berechnet oder einfach weitergegeben werden können, stehen auf einer geeigneten Ausgangsleitung 26 des Digitalrechners 25 an.

Patentansprüche

1. Verfahren zur Korrektur von Koinzidenzfehlern beim Zählen von Teilchen einer ersten Sorte in Gegenwart von Teilchen einer zweiten Sorte in einer gemischten Suspension beider Sorten, wobei die Teilchen der zweiten Sorte grösser und in höherer Konzentration vorhanden sind als die Teilchen der ersten Sorte, insbesondere beim Zählen von Thrombozyten in Gegenwart von Erythrozyten in einer verdünnten Blutprobe, wobei je einem Teilchen entsprechende elektrische Impulse erzeugt werden, deren Impulshöhe der Teilchengrösse entspricht, und diese Impulse während einer vorbestimmten Messzeit erzeugt und gezählt werden, und wobei aufgrund der Impulshöhe unterschieden wird zwischen ersten Impulsen, die der ersten Sorte von Teilchen entsprechen, und zweiten Impulsen, die der zweiten Sorte von Teilchen entsprechen, gekennzeichnet durch folgende Verfahrensschritte:

- Zählen sowie Messen der Gesamtdauer aller Impulse zum Bilden eines Zählergebnisses $Z_S$ und einer Gesamtdauer $T_S$;

- Zählen sowie Messen der Gesamtdauer der zweiten Impulse zum Bilden eines Zählergebnisses $Z_E$ und einer Gesamtdauer $T_E$;

- Bilden eines in bezug auf den Kreuzkoinzidenz-Fehler korrigierten Zählergebnisses $Z_T^*$ für die ersten Impulse gemäss der Gleichung

$$Z_T^* = (Z_S - Z_E) \cdot \frac{T_S}{(T_S - T_E)}$$

0100891

2. Vorrichtung zur Ausübung des Verfahrens nach Anspruch 1, mit einer Detektoranordnung (12) zum Erzeugen von je einem Teilchen entsprechenden Impulsen, einer Diskriminatorschaltung (14) zum Vergleich der Impulshöhen mit einem Schwellenwert zwecks Unterscheidung von ersten und zweiten Impulsen, wobei die Impulshöhe der zweiten Impulse den Schwellenwert überschreitet, und zwei Zählerschaltungen (16, 18), dadurch gekennzeichnet, dass zwei digitale Zeitmessschaltungen (19, 20) und ein Digitalrechner (25) vorgesehen sind, die Diskriminatorschaltung (14) auf einer Leitung (17) alle Impulse und auf einer anderen Leitung (15) nur die zweiten Impulse in einer zur digitalen Zählung geeigneten Form liefert, die auf der einen Leitung (17) geführten Impulse der einen Zählerschaltung (18) und der einen Zeitmessschaltung (20) und die auf der anderen Leitung (15) geführten Impulse der anderen Zählerschaltung (16) und der anderen Zeitmessschaltung (19) zugeführt werden, und dass die beiden Zählerschaltungen sowie die beiden Zeitmessschaltungen ausgangsseitig über geeignete Leitungen (21, 22, 23, 24) mit dem Digitalrechner (25) verbunden sind, an dessen Ausgang (26) ein um den Kreuzkoinzidenz-Fehler korrigiertes Zählergebnis für die ersten Impulse ansteht.

TE 19    23
ZE 21    16
ZS 22    18
TS 24    20

12  6  9  10  11  7  4  3  8  1  5  2

13  14  15  17  25  26

0100891

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | US-A-3 938 038 (S.K. CAMPBELL)<br>* Seite 1 *<br><br>--- | 1 | G 01 N 15/00 |
| A | DE-A-2 022 878 (COULTER)<br>* Seite 33; Anspruch 1 *<br><br>--- | 1 | |
| A | FR-A-2 399 656 (BECTON, DICKINSON & CO.)<br>* Seite 19; Anspruch 1 *<br><br>--- | 1 | |
| P,A | FR-A-2 506 974 (TECHNICON)<br>* Seite 11 *<br><br>----- | 1 | |

| | | RECHERCHIERTE SACHGEBIETE (Int. Cl. ³) |
|---|---|---|
| | | G 01 N 15/00 |

Der vorliegende Recherchenbericht wurde für alle Patentansprüche erstellt.

| Recherchenort<br>DEN HAAG | Abschlußdatum der Recherche<br>22-11-1983 | Prüfer<br>DUCHATELLIER M.A. |
|---|---|---|

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82